# EUROPEAN PATENT SPECIFICATION

(11) **EP 4 371 784 B1**
(45) Date of publication and mention of the grant of the patent: **24.09.2025**
(21) Application number: 23202024.8
(22) Date of filing: 06.10.2023
(51) Int. Cl.: B60C 5/14, B60C 9/14, B60C 19/00

(54) **TIRE**
REIFEN
PNEUMATIQUE

(30) Priority: 21.10.2022 JP 2022168899
(43) Date of publication of application: 22.05.2024
(73) Proprietor: Sumitomo Rubber Industries, Ltd., Kobe-shi, Hyogo 651-0072 (JP)
(72) Inventor: WILDGRUBE, Axel, 63456 Hanau (DE); DIETZ, Niklas, 63456 Hanau (DE); MACKENROTH, Tim, 63456 Hanau (DE); SUENO, Junya, Kobe-shi, 651-0072 (JP)
(74) Representative: Manitz Finsterwald Patent- und Rechtsanwaltspartnerschaft mbB

(56) References cited:
- EP-A1- 1 011 991
- EP-A1- 2 927 027
- DE-A1- 102013 106 015
- US-A1- 2006 113 019

## Description

### TECHNICAL FIELD

This invention relates to tires.

### BACKGROUND

In vehicle design, noise levels are assessed both inside and outside the vehicle. For example, pass-by noise generally refers to the external sound of a moving vehicle, i.e., the noise perceived as the vehicle "passes by." Pass-by noise leads to noise pollution and is subject to regulations (e.g., ISO 362). Pass-by noise is assessed at a vehicle level, but many of the vehicle's components contribute to pass-by noise. Tires are one such vehicle component. Designing a tire to suppress pass-by noise can entail modifications in the tread pattern, sidewall, or structure to name some examples. Such modifications can be made to address noise inside of the vehicle (interior noise). Although these modifications may reduce tire noise in some cases, they may also make the manufacturing process longer or more complicated.

DE 10 2013 106 015 A1 discloses a pneumatic tire according to the preamble of claim 1. Other related tires are disclosed in US 2006/0113019 A1, EP 2 927 027 A1, and EP 1 011 991 A1.

### SUMMARY

According to claim 1, a tire includes a tread portion; a pair of bead portions; a pair of sidewall portions, each of which extend between the tread portion and a respective bead portion; a carcass that extends from one bead portion to the other, through the sidewall portions and tread portion; a belt disposed outside of the carcass in a radial direction of the tire, the belt comprising one or more belt plies that extend in an axial direction of the tire; and an inner surface that defines a tire cavity; wherein each sidewall portion comprises an intermediate layer arranged inward in the tire radial direction from the carcass, wherein each intermediate layer comprises an outer edge that overlaps the belt and an inner edge arranged in the sidewall portion or bead portion; wherein the tire further comprises an inner layer arranged inward in the tire radial direction from the tread portion, the inner layer having a thickness in the radial direction defined by the carcass and inner surface; wherein the thickness of the inner layer is greater than a thickness between the carcass and inner surface in the sidewall portions; wherein the inner layer comprises a region having a substantially constant thickness along the axial direction of the tire, and wherein the inner layer comprises a tapered region arranged on each side of the central region.

Embodiments of the tire may optionally include one or more of the following.

In some instances, each of the one or more belt plies and the inner layer has a width in the tire axial direction, and the width of the inner layer is less than the width of each of the one or more belt plies. For example, a ratio between the width of the inner layer and the smallest width amongst the one or more belt plies can range from about 0.8 to 1.0.

In some cases, the inner layer overlaps the outer edge of each intermediate layer.

The thickness of the inner layer can range from about 2.0 to 4.5 mm, more specifically from about 2.5 to 3.5 mm.

In some cases, a ratio between the thickness of the inner layer and the thickness between the carcass and inner surface in each sidewall portion can range from about 1.75 to 3.5.

The location of the inner edge of each intermediate layer may vary. For example, each bead portion can include a bead core, the carcass can include two turn up portions in which the carcass wraps around a respective bead core and is folded onto itself, and the inner edge of each intermediate layer can overlap a corresponding turn up portion of the carcass. In some cases, each bead portion can include a bead core and a bead apex arranged adjacent to the bead core, the carcass can include two turn up portions in which the carcass wraps around a respective bead core and is folded onto the bead apex, and the inner edge of each intermediate layer can overlap the bead apex.

The inner layer can be formed by various materials. For example, the inner layer can be formed of a butyl rubber arranged in direct contact with the carcass in a region that overlaps the belt plies. More specifically, the inner layer can include one or more strips of butyl rubber that are wound about an axis of the tire. In some cases, the same one or more strips of butyl rubber are wound about the tire axis in each sidewall portion to form a butyl rubber layer arranged inward from the intermediate layer in the tire radial direction. Additionally, each intermediate layer can optionally include a monolithic body of extruded rubber.

The subject matter described herein can be implemented in particular embodiments so as to realize one or more of the following advantages.

Generally speaking, the inner layer occupies a space below the tread portion and formed between the outer edges of the two intermediate layers. This arrangement may allow for targeted and accurate placement of an inner layer having a relatively wide axial width relative to the minimum axial width of the belt. Thus, noise reduction may be improved without sacrificing rolling resistance.

In some cases, the inner layer can be built on a tire building drum integrally with other components of the tire, which may lead to improvements in manufacturing efficiency and structural integrity of the finished tire.

The details of one or more embodiments are set forth in the appended drawings and the description below. Other features and advantages will be apparent from the description and drawings, and from the claims.

### DESCRIPTION OF DRAWINGS

Fig. 1 is a schematic cross-section of a tire.
Fig. 2 is an enlarged view of the tread portion of Fig. 1.
Fig. 3 is an enlarged view of the sidewall and bead portions of Fig. 1.
Fig. 4 is an enlarged view of a different sidewall and bead portion.

Like reference numerals in the various drawings indicate like elements.

### DETAILED DESCRIPTION

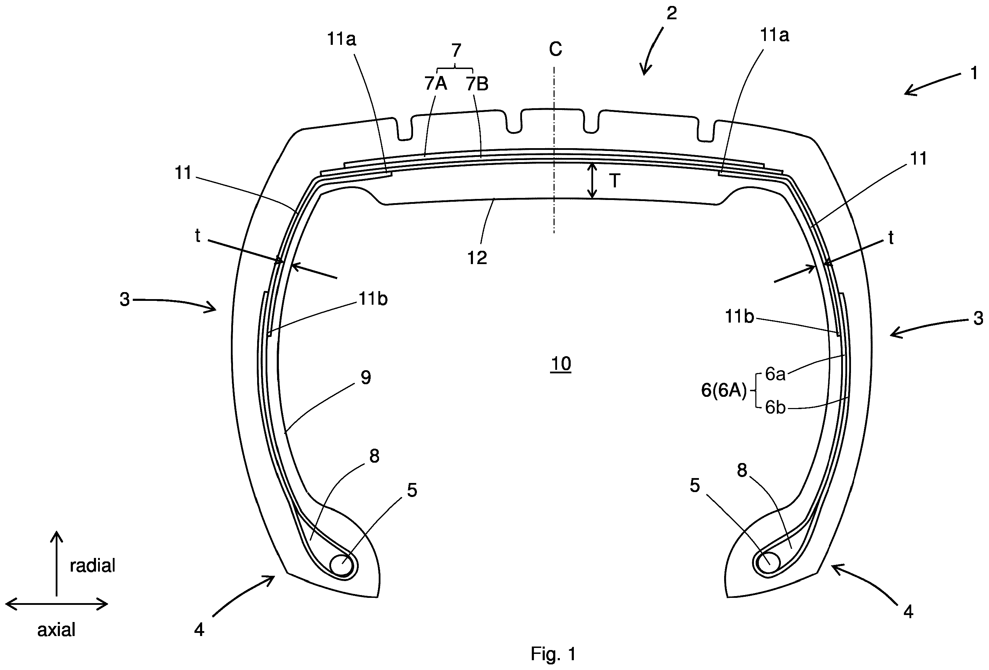

Fig. 1 shows a schematic cross-section of a pneumatic tire 1 along a radial plane that intersects the tire's axis of rotation (not shown). In the following description, the expressions "axial" and "radial" are defined relative to the tire's axis of rotation.

As shown, the tire 1 includes a tread portion 2, a pair of sidewall portions 3, and a pair of bead portions 4. Each sidewall portion 3 extends between the tread portion 2 and one of the pair of bead portions 4. Each bead portion 4 includes a bead core 5, a ring-shaped reinforcing element typically formed by a bundle of wires (not shown). The tire 1 also includes a carcass 6 that extends from one bead portion 4 to the other via the sidewall portions 3 and tread portion 2 and a belt 7 disposed radially outward of the carcass 6. Although the tire 1 of Fig. 1 is schematically depicted with a pronounced corner between the tread portion 2 and each sidewall portion 3, in many cases, the transition between the two is much smoother, giving the carcass 6 a more rounded shape.

The carcass 6 can include a carcass ply 6A with a plurality of carcass cords coated by topping rubber. Carcass cords can include steel, an organic fiber such as polyester fibers, nylon fibers, rayon fibers, polyethylene naphthalate fibers, and aramid fibers to name a few examples. In some cases, the carcass cords extend at an angle of approximately 80 to 90 degrees to the tire equator C, providing the carcass 6 with a "radial" structure. However, the concepts described herein are not limited to such an orientation. In some instances, the carcass 6 can include more than one ply 6A.

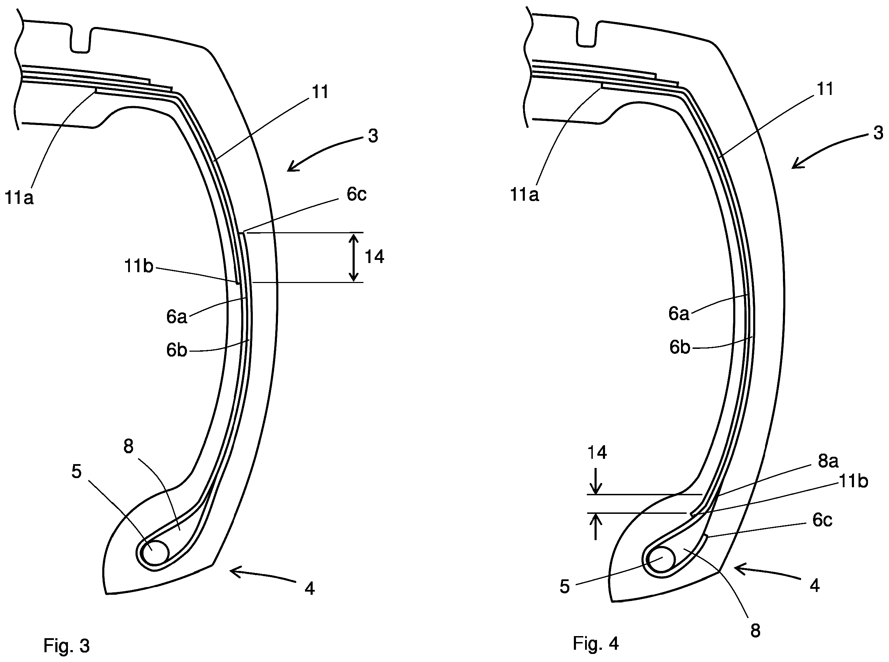

As also shown in Fig. 3, the carcass ply 6A can include a main portion 6a that extends from one bead core 5 to the other and a pair of turn up portions 6b that wrap around the bead core 5. In some cases, the bead portions 4 include a bead apex 8 (also called a "bead filler") that is disposed between the main portion 6a and one of the pair of turn up portions 6b. The bead apex 8 is often made of hard rubber and have a tapered shape that extends radially outward from the bead core 5. Although the bead apex 8 is shown as a single component in Fig. 1, in some cases, the bead apex 8 is formed by multiple (e.g., two) parts.

The belt 7 includes a plurality of belt plies 7A, 7B that extend in the axial direction of the tire. Each belt ply 7A, 7B includes a plurality of steel cords that extend at an angle of, e.g., approximately 10 to 60 degrees to the tire equator C. Although the tire 1 of Fig. 1 is shown with two belt plies 7A, 7B, other versions of the tire 1 can include more than two (e.g., four) belt plies. Generally speaking, the belt 7 can increase the rigidity of the tread portion 2 and counteract the so-called "hoop effect" in which the carcass 6 expands outward in the radial direction of the tire.

The tire 1 also includes an inner surface 9 that defines an inner cavity 10 along with a vehicle wheel or rim (not shown). The inner surface 9 is formed by a rubber layer that is impermeable to air and allows the tire 1 to be inflated to a predetermined pressure, as described below in more detail. For example, the rubber of the inner surface can include a natural rubber, a synthetic diene rubber, butyl rubber a halogenated butyl rubber, chlorobutyl rubber, and bromobutyl rubber to name a few examples. Often, the inner surface 9 is made from a butyl-type rubber, which is known to have low air permeability.

Each sidewall portion 3 includes an intermediate layer 11 that is arranged inward from the carcass 6 in the radial direction of the tire 1. In other words, the intermediate layers 11 are arranged between the inner surface 9 and the carcass 6. Each intermediate layer 11 includes an outer edge 11a that overlaps the belt 7 and an inner edge 11b arranged in the sidewall portion 3 or bead portion 4 (Fig. 4). With respect to the intermediate layer 11, the designations "inner" and "outer" refer to the radial direction of the tire 1. The intermediate layers 11 can be formed, e.g., by a sheet of topping rubber compounds used for carcass plies or some sidewall compounds.

The tire 1 also includes an inner layer 12 that is arranged inward from the tread portion 2 in the radial direction of the tire 1. The inner layer 12 has a thickness (T, measured in the radial direction) that is defined by the carcass 6 and the inner surface 9. The thickness T of the inner layer 12 is greater than a thickness t between the carcass 6 and the inner surface 9 in each of the sidewall portions 3. Thus, the inner layer 12 forms an integral belt-shaped body or plate that protrudes radially inward from the carcass 6 into the tire cavity 10. In many cases, the inner layer 12 extends along the entire circumference of the tire. However, there may be other cases in which inner layer 12 includes gaps or interruptions along the circumferential direction of the tire.

The inner layer 12 can be used to increase the weight of the tread portion 2 relative to the rest of the tire 1. The weight increase can increase the moment of inertia in the tread region 2 and suppress vibrations in the tread region that can lead to pass-by noise. At the same time, the frequency of oscillation that can lead to interior noise may also be reduced. As described below in more detail, the intermediate layers 11 are distinct from one another, i.e., there is a space or width W₁ in the axial direction between the outer edges 11a of the two intermediate layers 11. Generally speaking, the inner layer 12 occupies or fills this space. When manufacturing such a tire 1, the space between the outer edges 11a of the two intermediate layers 11 can serve as a point of reference that allows accurate placement of a relatively large inner layer 12 in some cases.

For instance, a balance between noise reduction and rolling resistance may be obtained by making the inner layer 12 as wide as possible, but not so wide that its axially outer edges extend beyond the outer edges of the belt plies. In more specific terms, the belt 7 can include a radially outer belt ply 7A that is stacked on a radially inner belt ply 7B. The radially outer belt ply 7A has an axial width W₂, and the radially inner belt ply 7B has an axial width W₃. The axial widths W₂, W₃ are measured from one edge of the belt ply 7A, 7B to the other. The inner layer 12 has an axial width W₄ that is less than both axial widths W₂, W₃, i.e., less than the smallest axial width out of all the belt plies. In some cases, the smallest axial width is the axial width of the outermost belt ply, in the illustrated example the radially outer belt ply 7A.

A ratio between the width W₄ of the inner layer 12 and the smallest axial width of all the belt plies 7A, 7B can range from about 0.8 to 1.0. For example, said ratio can range from 0.90 to 0.99. In other words, the inner layer 12 can extend as far as the axial edges of the narrowest belt ply 7A without extending past its edges. As a comparative example, a pneumatic tire with a thin rubber layer adhered to the inner surface below the tread region is considered. Similarly to the inner layer 12, such a thin rubber layer may increase the weight of the tread portion and reduce pass-by noise and interior noise to a certain extent. Since the thin rubber layer is applied to the built (or even vulcanized) tire, it is difficult to target placement of the rubber layer relative to the edges of the belt. The most straightforward way to ensure that the rubber layer is placed within the outer edges of the belt is to make the axial width of the rubber layer substantially smaller than the axial width of the belt although a larger axial width may generally improve noise reduction by the rubber layer. In contrast to this, the inner layer 12 can be integrally formed with the rest of the tire as part of the building process, which may allow accurate placement of even a relatively wide inner layer 12.

The tread portion 2 can include one or more grooves 13 that extend continuously in the circumferential direction of the tire. In some instances, the inner layer 12 overlaps all of the circumferential grooves 13. To put it another way, all of the circumferential grooves 13 are arranged within the axial width W₄ of the inner layer 12. However, not all tires have continuous circumferential grooves. Some tires have a "luggy" pattern that consists of a large number of blocks. The principles described herein can be applied both to tires with and without continuous circumferential grooves.

In some instances, the thickness T of the inner layer 12 can range from about 2.0 to 4.5 mm, or more specifically, 2.5 to 3.5 mm. In addition or alternatively, a ratio (T/t) between the thickness T of the inner layer 12 and the thickness t between the carcass 6 and the inner surface 9 in each of the sidewall portions 3 can range from about 1.75 to 3.5. For example, the ratio T/t can range from 1.9 to 2.7. In some cases, the thickness T and/or the thickness t may be substantially constant. For example, the inner layer 12 may have a substantially rectangular cross-section having a constant thickness T (not shown). In some instances, the sidewall portions 3 have the same thickness t on each side of the tire 1.

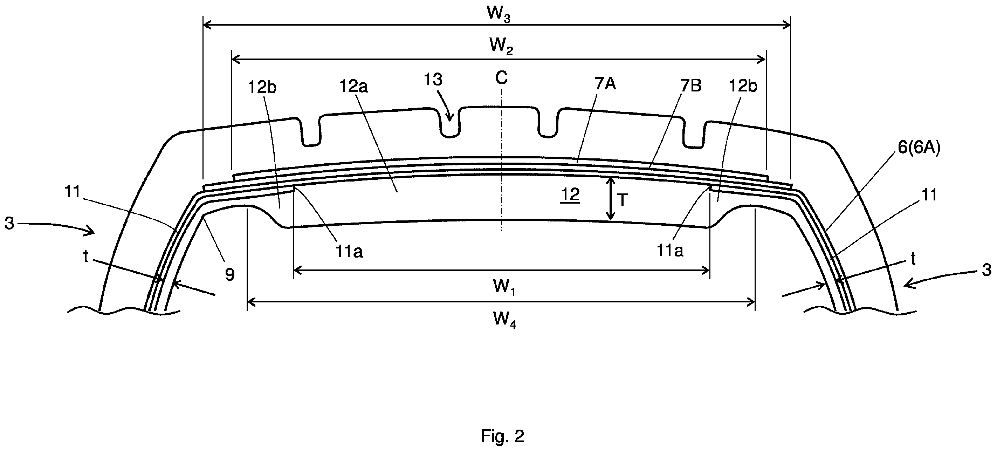

In other cases, the thickness T and/or the thickness t may vary. In this case, the aforementioned ratios and dimensions relate to the maximum thickness. The inner layer 12 includes a central region 12a having a substantially constant thickness T and a tapered region 12b arranged on each side of the central region 12a. The aforementioned ratios and dimensions are based on the thickness T of the central region 12a in this example. In other cases, the thickness T of the inner layer 12 may continuously vary along the axial direction of the tire. Again, in this case, the aforementioned ratios and dimensions are based on the maximum thickness. In such cases, the width W₄ of the inner layer 12 is measured at the point in which the thickness between the carcass 6 and the inner surface 9 is greater than the thickness t in the sidewall portion 3. For example, the axial width W₄ includes the tapered regions 12b in Fig. 2.

Referring still to Fig. 2, the inner layer 12 can be formed from butyl rubber that is arranged in direct contact with the carcass in a region that overlaps the belt plies, i.e., without any other layers or materials arranged between the butyl rubber and the carcass ply 6A. For example, such an inner layer 12 can be formed using known strip winding techniques, in which one or more strips of butyl rubber are wound about an axis of the tire to form the cross-section depicted in Fig. 1 and 2. In some instances, the same one or more strips of butyl rubber can be wound about the tire axis to form the inner surface 9 along each of the sidewall portions 3. Thus, it is possible to build the integral inner layer 12 on a tire building drum without a substantial increase in the building duration or number of steps. Such implementations can optionally further include intermediate layers 11 formed by a monolithic body of extruded rubber, i.e., intermediate layers 11 that are not formed using strip winding techniques. Extruded intermediate layers 11 can be applied to the strip wound butyl rubber relatively quickly. However, the principles described herein can also be applied to intermediate layers 11 formed by strip winding techniques as well as to an inner layer 12 formed by an extruded body of rubber.

Further, although the drawings depict the inner layer 12 as a unitary component formed by a single material (e.g., butyl rubber). The inner layer 12 can also include two or more layers (not shown). In any case, the inner surface 9 of the inner layer 12 includes a material that is impermeable to air.

Fig. 3 is an enlarged view of the sidewall portion 3 and bead portion 4 in Fig. 1. More specifically, Fig. 3 shows that the main portion 6a and the turn up portion 6b of the carcass ply 6A can be continuous. The main portion 6a extends from the tread portion 2, radially inward along the sidewall portion 3 and towards the bead core 5. The carcass ply 6A the extends axially outward, along the surface of the bead core 5 and bead apex 8 and smoothly transitions into the turn up portion 6b. The turn up portion 6b extends outwardly in the radial direction and ends in a turn up edge 6c. The turn up edge 6c is arranged radially outward of the inner edge 11b of the intermediate layer, such that the intermediate layer 11 and the turn up portion 6b overlap (reference numeral 14).

Although the overlap 14 shown in Fig. 3 is relatively small, in some cases, the intermediate layer 11 can extend further to create a larger overlap 14. For example, the inner edge 11b of the intermediate layer 11 may extend past a tip 8a of the bead apex 8 in a similar way to what is shown in Fig. 3. In this case, the intermediate layer 11 extends along the entire sidewall portion 3, i.e., from the tread portion 2 to the bead portion 4. Such a design may help the tire 1 withstand greater pressure during the tire building process.

Whereas Fig. 3 shows a "high turn up" arrangement, Fig. 4 shows a "low turn up" arrangement, in which the turn up portion 6b is folded onto the bead apex 8. Thus the turn up edge 6c is arranged below the tip 8a of the bead apex 8. Although the bead apex 8 of Fig. 1, 3, and 4 has a relatively small radial height, in other tires, the bead apex 8 can be taller. In any case, the inner edge 11b of the intermediate layer 11 extends radially inward, past the tip 8a of the bead apex 8. Accordingly, the intermediate layer 11 and the bead apex 8 overlap (reference numeral 14).

In some instances, the tire may include additional components that are not shown in the drawings but are familiar to the skilled person, e.g., cap plies that are arranged radially outward from the belt.

Unless defined otherwise, the concepts and features described above and shown in the drawing apply to the tire in its "normal state." For pneumatic tires that are subject to various standards, the "normal state" is a state in which a tire is mounted on a normal rim and inflated to a normal internal pressure, and no load is applied to the tire. The "normal rim" collectively refers to the rims defined by applicable standards, for example the "standard rim" in the JATMA standard, the "Design Rim" in the TRA standard, and the "Measuring Rim" in the ETRTO standard. Likewise, the "normal internal pressure" collectively refers to the standard air pressure defined by each applicable standard, for example, the "maximum air pressure" in the JATMA standard and the maximum value recited in the table "TIRE LOAD LIMITS AT VARIOUS COLD INFLATION PRESSURES" in the TRA standard and "INFLATION PRESSURE" in the ETRTO standard, respectively. For tires that are not subject to such standards, "normal state" refers to a state in which the tire is not mounted to a vehicle and no load is applied. Unless otherwise specified, dimensions and the like of components of the tire disclosed herein are values measured in the normal state.

Although the drawings have been described in reference to a schematic of a passenger car tire, the principles described herein can also be applied to other types of tires, such as motorcycle tires, van tires, truck tires, and any other types of heavy-duty tires to name a few examples.

While a number of examples have been described above for the purpose of illustration, the description is not intended to limit the scope of the invention, which is defined by the scope of the following claims.

## Claims

1. A pneumatic tire (1) comprising:
a tread portion (2);
a pair of bead portions (4);
a pair of sidewall portions (3), each of which extend between the tread portion (2) and a respective bead portion (4);
a carcass (6) that extends from one bead portion (4) to the other, through the sidewall portions (3) and tread portion (2);
a belt (7) disposed outside of the carcass (6) in a radial direction of the tire (1), the belt (7) comprising one or more belt plies (7A, 7B) that extend in an axial direction of the tire (1); and
an inner surface (9) that defines a tire cavity (10);
wherein each sidewall portion (3) comprises an intermediate layer (11) arranged inward in the tire radial direction from the carcass (6), wherein each intermediate layer (11) comprises an outer edge (11a) that overlaps the belt (7) and an inner edge (11b) arranged in the sidewall portion (3) or bead portion (4);
wherein the tire (1) further comprises an inner layer (12) arranged inward in the tire radial direction from the tread portion (2), the inner layer (12) having a thickness (T) in the radial direction defined by the carcass (6) and inner surface (9);
wherein the thickness (T) of the inner layer (12) is greater than a thickness (t) between the carcass (6) and inner surface (9) in the sidewall portions (3); and
wherein the inner layer (12) comprises a region having a substantially constant thickness (T) along the axial direction of the tire (1),
**characterized in that** the inner layer (12) comprises a tapered region (12b) arranged on each side of the central region (12a).

2. The pneumatic tire (1) of claim 1, wherein each of the one or more belt plies (7A, 7B) and the inner layer (12) have a width in the tire axial direction, and the width (W₄) of the inner layer (12) is less than the width of each of the one or more belt plies (7A, 7B).

3. The pneumatic tire (1) of claim 2, wherein a ratio between the width (W₄) of the inner layer (12) and the smallest width amongst the one or more belt plies (7A, 7B) ranges from 0.8 to 1.0.

4. The pneumatic tire (1) of any one of claims 1 to 3, wherein the inner layer (12) overlaps the outer edge (11a) of each intermediate layer (11).

5. The pneumatic tire (1) of any one of claims 1 to 4, wherein the thickness (T) of the inner layer (12) ranges from 2.0 to 4.5 mm.

6. The pneumatic tire (1) of claim 5, wherein the thickness (T) of the inner layer (12) ranges from 2.5 to 3.5 mm.

7. The pneumatic tire (1) of any one of claims 1 to 6, wherein a ratio (T/t) between the thickness (T) of the inner layer (12) and the thickness (t) between the carcass (6) and inner surface (9) in each sidewall portion (3) ranges from 1.75 to 3.5.

8. The pneumatic tire (1) of any one of claims 1 to 7, wherein each bead portion (4) comprises a bead core (5), and the carcass (6) comprises two turn up portions (6b) in which the carcass (6) wraps around a respective bead core (5) and is folded onto itself; and
wherein the inner edge (11b) of each intermediate layer (11) overlaps a corresponding turn up portion (6b) of the carcass (6).

9. The pneumatic tire (1) of any one of claims 1 to 7, wherein each bead portion (4) comprises a bead core (5) and a bead apex (8) arranged adjacent to the bead core (5), and the carcass (6) comprises two turn up portions (6b) in which the carcass (6) wraps around a respective bead core (5) and is folded onto the bead apex (8); and
wherein the inner edge (11b) of each intermediate layer (11) overlaps the bead apex (8).

10. The pneumatic tire (1) of any one of claims 1 to 9, wherein the inner layer (12) is formed of a butyl rubber arranged in direct contact with the carcass (6).

11. The pneumatic tire (1) of claim 10, wherein the inner layer (12) comprises one or more strips of butyl rubber that are wound about an axis of the tire (1).

12. The pneumatic tire (1) of claim 11, wherein the one or more strips of butyl rubber are wound about the tire axis in each sidewall portion (3) to form a butyl rubber layer arranged inward from the intermediate layer (11) in the tire radial direction.

## Patentansprüche

1. Luftreifen (1), umfassend:
einen Laufflächenabschnitt (2);
ein Paar Wulstabschnitte (4);
ein Paar Seitenwandabschnitte (3), von denen sich jeder zwischen dem Laufflächenabschnitt (2) und einem jeweiligen Wulstabschnitt (4) erstreckt;
eine Karkasse (6), die sich von einem Wulstabschnitt (4) zum anderen durch die Seitenwandabschnitte (3) und den Laufflächenabschnitt (2) erstreckt;
einen Gürtel (7), der in einer radialen Richtung des Reifens (1) außen von der Karkasse (6) angeordnet ist, wobei der Gürtel (7) eine oder mehrere Gürtellagen (7A, 7B) umfasst, die sich in einer axialen Richtung des Reifens (1) erstrecken; und
eine Innenfläche (9), die einen Reifenhohlraum (10) definiert;
wobei jeder Seitenwandabschnitt (3) eine Zwischenschicht (11) umfasst, die in der radialen Richtung des Reifens innen von der Karkasse (6) angeordnet ist, wobei jede Zwischenschicht (11) eine Außenkante (11a), die den Gürtel (7) überlappt, und eine Innenkante (11b), die in dem Seitenwandabschnitt (3) oder dem Wulstabschnitt (4) angeordnet ist, umfasst;
wobei der Reifen (1) ferner eine Innenschicht (12) umfasst, die in der radialen Richtung des Reifens innen von dem Laufflächenabschnitt (2) angeordnet ist, wobei die Innenschicht (12) eine Dicke (T) in der radialen Richtung aufweist, die durch die Karkasse (6) und die Innenfläche (9) definiert ist;
wobei die Dicke (T) der Innenschicht (12) größer als eine Dicke (t) zwischen der Karkasse (6) und der Innenfläche (9) in den Seitenwandabschnitten (3) ist; und
wobei die Innenschicht (12) einen Bereich mit einer im Wesentlichen konstanten Dicke (T) entlang der axialen Richtung des Reifens (1) umfasst,
**dadurch gekennzeichnet, dass** die Innenschicht (12) einen verjüngten Bereich (12b) umfasst, der auf jeder Seite des zentralen Bereichs (12a) angeordnet ist.

2. Luftreifen (1) nach Anspruch 1, wobei eine jede der einen oder mehreren Gürtellagen (7A, 7B) und die Innenschicht (12) eine Breite in der axialen Richtung des Reifens aufweisen und die Breite (W₄) der Innenschicht (12) kleiner als die Breite einer jeden der einen oder mehreren Gürtellagen (7A, 7B) ist.

3. Luftreifen (1) nach Anspruch 2, wobei ein Verhältnis zwischen der Breite (W₄) der Innenschicht (12) und der kleinsten Breite unter der einen oder den mehreren Gürtellagen (7A, 7B) im Bereich von 0,8 bis 1,0 liegt.

4. Luftreifen (1) nach einem der Ansprüche 1 bis 3, wobei die Innenschicht (12) die Außenkante (11a)jeder Zwischenschicht (11) überlappt.

5. Luftreifen (1) nach einem der Ansprüche 1 bis 4, wobei die Dicke (T) der Innenschicht (12) im Bereich von 2,0 bis 4,5 mm liegt.

6. Luftreifen (1) nach Anspruch 5, wobei die Dicke (T) der Innenschicht (12) im Bereich von 2,5 bis 3,5 mm liegt.

7. Luftreifen (1) nach einem der Ansprüche 1 bis 6, wobei ein Verhältnis (T/t) zwischen der Dicke (T) der Innenschicht (12) und der Dicke (t) zwischen der Karkasse (6) und der Innenfläche (9) in jedem Seitenwandabschnitt (3) im Bereich von 1,75 bis 3,5 liegt.

8. Luftreifen (1) nach einem der Ansprüche 1 bis 7, wobei jeder Wulstabschnitt (4) einen Wulstkern (5) umfasst und die Karkasse (6) zwei Umschlagabschnitte (6b) umfasst, in denen sich die Karkasse (6) um einen jeweiligen Wulstkern (5) wickelt und auf sich selbst gefaltet ist; und
wobei die Innenkante (11b) jeder Zwischenschicht (11) einen entsprechenden Umschlagabschnitt (6b) der Karkasse (6) überlappt.

9. Luftreifen (1) nach einem der Ansprüche 1 bis 7, wobei jeder Wulstabschnitt (4) einen Wulstkern (5) und einen benachbart zu dem Wulstkern (5) angeordneten Wulstkernreiter (8) umfasst und die Karkasse (6) zwei Umschlagabschnitte (6b) umfasst, in denen sich die Karkasse (6) um einen jeweiligen Wulstkern (5) wickelt und auf den Wulstkernreiter (8) gefaltet ist; und
wobei die Innenkante (11b) jeder Zwischenschicht (11) den Wulstkernreiter (8) überlappt.

10. Luftreifen (1) nach einem der Ansprüche 1 bis 9, wobei die Innenschicht (12) aus einem Butylkautschuk gebildet ist, der in direktem Kontakt mit der Karkasse (6) angeordnet ist.

11. Luftreifen (1) nach Anspruch 10, wobei die Innenschicht (12) einen oder mehrere Streifen aus Butylkautschuk umfasst, die um eine Achse des Reifens (1) gewickelt sind.

12. Luftreifen (1) nach Anspruch 11, wobei der eine oder die mehreren Streifen aus Butylkautschuk in jedem Seitenwandabschnitt (3) um die Reifenachse gewickelt sind, um eine Butylkautschukschicht zu bilden, die in der radialen Richtung des Reifens innen von der Zwischenschicht (11) angeordnet ist.

## Revendications

1. Bandage pneumatique (1) comprenant :
une portion formant bande de roulement (2) ;
une paire de portions de talon (4) ;
une paire de portions formant parois latérales (3), chacune d'elles s'étendant entre la portion formant bande de roulement (2) et une portion de talon respective (4) ;
une carcasse (6) qui s'étend depuis une portion de talon (4) jusqu'à l'autre, à travers les portions formant parois latérales (3) et la portion formant bande de roulement (2) ;
une ceinture (7) disposée à l'extérieur de la carcasse (6) dans une direction radiale du pneumatique (1), la ceinture (7) comprenant une ou plusieurs nappes de ceinture (7A, 7B) qui s'étendent dans une direction axiale du pneumatique (1) ; et
une surface intérieure (9) qui définit une cavité de pneumatique (10) ;
dans lequel chaque portion formant paroi latérale (3) comprend une couche intermédiaire (11) agencée à l'intérieur, dans la direction radiale du pneumatique, par rapport à la carcasse (6), chaque couche intermédiaire (11) comprenant un bord extérieur (11a) qui chevauche la ceinture (7) et un bord intérieur (11b) agencé dans la portion formant paroi latérale (3) ou la portion de talon (4) ;
dans lequel le pneumatique (1) comprend en outre une couche intérieure (12) agencée à l'intérieur, dans la direction radiale du pneumatique, par rapport à la portion formant bande de roulement (2), la couche intérieure (12) ayant une épaisseur (T) dans la direction radiale définie par la carcasse (6) et la surface intérieure (9) ;
dans lequel l'épaisseur (T) de la couche intérieure (12) est supérieure à une épaisseur (t) entre la carcasse (6) et la surface intérieure (9) dans les portions formant parois latérales (3) ; et
dans lequel la couche intérieure (12) comprend une région ayant une épaisseur sensiblement constante (T) le long de la direction axiale du pneumatique (1),
**caractérisé en ce que** la couche intérieure (12) comprend une région effilée (12b) agencée sur chaque côté de la région centrale (12a).

2. Bandage pneumatique (1) selon la revendication 1, dans lequel chacune desdites une ou plusieurs nappes de ceinture (7A, 7B) et la couche intérieure (12) ont une largeur dans la direction axiale du pneumatique, et la largeur (W₄) de la couche intérieure (12) est inférieure à la largeur de chacune desdites une ou plusieurs nappes de ceinture (7A, 7B).

3. Bandage pneumatique (1) selon la revendication 2, dans lequel un rapport entre la largeur (W₄) de la couche intérieure (12) et la plus petite largeur parmi lesdites une ou plusieurs nappes de ceinture (7A, 7B) va de 0,8 à 1,0.

4. Bandage pneumatique (1) selon l'une quelconque des revendications 1 à 3, dans lequel la couche intérieure (12) est en chevauchement avec le bord extérieur (11a) de chaque couche intermédiaire (11).

5. Bandage pneumatique (1) selon l'une quelconque des revendications 1 à 4, dans lequel l'épaisseur (T) de la couche intérieure (12) va de 2,0 à 4,5 mm.

6. Bandage pneumatique (1) selon la revendication 5, dans lequel l'épaisseur (T) de la couche intérieure (12) va de 2,5 à 3,5 mm.

7. Bandage pneumatique (1) selon l'une quelconque des revendications 1 à 6, dans lequel un rapport (T/t) entre l'épaisseur (T) de la couche intérieure (12) et l'épaisseur (t) entre la carcasse (6) et la surface intérieure (9) dans chaque portion formant paroi latérale (3) va de 1,75 à 3,5.

8. Bandage pneumatique (1) selon l'une quelconque des revendications 1 à 7, dans lequel chaque portion de talon (4) comprend une âme de talon (5), et la carcasse (6) comprend deux portions retroussées (6b) dans lesquelles la carcasse (6) s'enroule autour d'une âme de talon respective (5) et est repliée sur elle-même ; et
dans lequel le bord intérieur (11b) de chaque couche intermédiaire (11) est en chevauchement avec une portion retroussée correspondante (6b) de la carcasse (6).

9. Bandage pneumatique (1) selon l'une quelconque des revendications 1 à 7, dans lequel chaque portion de talon (4) comprend une âme de talon (5) et un apex de talon (8) agencé de manière adjacente à l'âme de talon (5), et la carcasse (6) comprend deux portions retroussées (6b) dans lesquelles la carcasse (6) s'enroule autour d'une âme de talon respective (5) et est repliée jusque sur l'apex de talon (8) ; et dans lequel le bord intérieur (11b) de chaque couche intermédiaire (11) est en chevauchement avec l'apex de talon (8).

10. Bandage pneumatique (1) selon l'une quelconque des revendications 1 à 9, dans lequel la couche intérieure (12) est formée d'un caoutchouc butyle agencé en contact direct avec la carcasse (6).

11. Bandage pneumatique (1) selon la revendication 10, dans lequel la couche intérieure (12) comprend une ou plusieurs bandes de caoutchouc butyle qui sont enroulées autour d'un axe du pneumatique (1).

12. Bandage pneumatique (1) selon la revendication 11, dans lequel lesdites une ou plusieurs bandes de caoutchouc butyle sont enroulées autour de l'axe de pneumatique dans chaque portion formant paroi latérale (3) pour former une couche de caoutchouc butyle agencée à l'intérieur par rapport à la couche intermédiaire (11) dans la direction radiale du pneumatique.
